# EUROPEAN PATENT APPLICATION

(11) **EP 1 548 446 A1**
(43) Date of publication of application: **29.06.2005**
(21) Application number: 04255512.8
(22) Date of filing: 11.09.2004
(51) Int. Cl.: G01N 35/04, B01L 3/14

(54) **Actuator assembly**

(30) Priority: 25.09.2003 GB 0322444
(71) Applicant: RTS Thurnall PLC, Irlam, Manchester M44 5AY (GB)
(72) Inventor: Pilkington, John, High Peak, Derbyshire SK23 7NS (GB); Craven, James Norman, Abbotsley, Cambridgeshire PE19 6UD (GB)
(74) Representative: Wilson Gunn M'Caw

(57) **Abstract**

An actuator assembly having a body 8, at least one movable member 9 movable relative to the body between a first position and a second position by application of fluid pressure and a releasable latch means 16 operable to retain the movable member in the first position. The latch means may be operative to cover at least part of the surface of the moveable member to which fluid pressure may be applied to move the member when the movable member is latched in the first position thereby preventing fluid pressure being applied to the covered part of the surface. The latch means may be a magnet. The assembly is particularly intended for use with microtube handling apparatus.

## Description

The present invention relates to an actuator assembly, particularly, but not exclusively for use with compound storage vessel handling apparatus.

Contemporary drug development involves the preparation and storage of a large number of compounds, and subsequent later retrieval of selected compounds. Typically small quantities of compounds are stored in microtubes. The microtubes are stored in racks which are in turn stored in cold stores. Introduction of microtubes into a cold store and subsequent retrieval of selected microtubes is usually automated.

In our co-pending application number 0314686.7 a method and apparatus for handling microtubes are disclosed. The method is for handling a compound storage vessel disposed in a cavity in a rack, the cavity having an upper opening and a lower opening, and comprises the step of introducing a lifting pin into the cavity through the lower opening to urge the compound storage vessel upwards within the cavity. Correspondingly the apparatus is for handling a compound storage vessel disposed in a cavity in a rack, the cavity having an upper opening and a lower opening, and comprises a lifting pin and associated actuator, the lifting pin being arranged to be inserted into the cavity through the lower opening and operable by means of the actuator to urge the compound storage vessel upwards within the cavity. In a preferred embodiment microtubes are urged upwardly out of the cavity of a rack into a cavity in a lifting head in which they are retained by a friction fit.

In an existing standard arrangement microtubes are stored in cavities in racks arranged with a 4.5mm pitch. Where lifting pins are provided for such a rack it is preferred that a pin is provided for each cavity and that each pin is associated with an actuator operative to move the pin. The actuators are preferably individually operable, and must of course be arranged at the same pitch as the lifting pins. The actuators must also be able to urge the microtubes with sufficient force to move them into a cavity in a lifting head into which they are received with a friction fit.

The three requirements of small size, individual operability and magnitude of force to be applied are difficult or impossible to achieve using conventional actuators.

It is an object of embodiments of the present invention to provide an actuator suitable for use with storage vessel, especially microtube, handling apparatus. The invention is not limited to this application though.

According to the present invention there is provided an actuator assembly comprising a body, a movable member movable relative to the body between a first position and a second position by application of fluid pressure and a releasable latch means operable to retain the movable member in the first position.

The releasable latch means may retain the movable member in the first position against any application of fluid pressure. The movable member may comprise a piston. The movable member preferably comprises, or is associated with, a surface to which fluid pressure is applied to move the movable member relative to the body and the latch means is preferably operative to cover at least part of the surface when the movable member is latched in the first position thereby to prevent fluid pressure being applied to the covered part of the surface. This reduces the amount of force that fluid pressure can exert on the movable member when in the latched state and therefore reduces the strength of the latch means required. The latch means may comprise a magnet, particularly an electromagnet. Latch means is to be understood as any means capable of retaining the moveable member in the first position.

Preferably the actuator assembly comprises a plurality of movable members, each associated with a respective individually operable latch means. The movable members are preferably arranged in a matrix or grid such that each movable member may be associated with a respective cavity of a microtube rack, or similar. Other arrangements are, of course, possible depending upon the application of the actuator assembly. In one arrangement each movable member is arranged to operate a syringe or pump in order to provide fluid handling apparatus.

Where a plurality of movable members is provided it is preferred that fluid pressure may be applied simultaneously to all of the movable members. This is conveniently achieved by providing that each movable member is in fluid communication with a common fluid chamber. This simplifies construction of the assembly.

Return means for moving the or each movable member from the second position at the first position may be provided.

By operating the movable members with fluid pressure it is possible to relatively easily arrange for sufficient force to be provided by the movable members to move microtubes into a cavity with which they have a friction fit. Provision of individually operable latch means, each associated with a respective movable member, enables the movable members to be individually operated. Those movable members it is desired not to move are latched into the first position before fluid pressure is applied to move the remaining movable members towards the second position. Provision of individual latch means, especially electromagnetic latch means, is more convenient than providing means to individually apply fluid pressure to each movable means. Individual electromagnets may be provided in an array on a printed circuit board one magnet disposed beneath each of an array of movable means. By virtue of the fact that an electromagnetic latch can be arranged to prevent or reduce application of fluid pressure to a movable means the latching force provided by the latch can be considerably less than the force applied to the movable means when fluid pressure is exerted.

In order that the invention may be more clearly understood an embodiment thereof will now be described by way of example with reference to the accompanying drawings of which:
- Figure 1: is a side schematic cross-sectional view of a lifting head being used to remove microtubes from a microtube storage rack;
- Figure 2: is a side view of an actuator assembly according to the invention; and
- Figure 3: is a cross-sectional view of the assembly of Figure 2 taken along the line III-III of Figure 2.

In the following description references to upper, lower, top, bottom and the like refer to the apparatus as illustrated, and are not intended to be limiting in any other way.

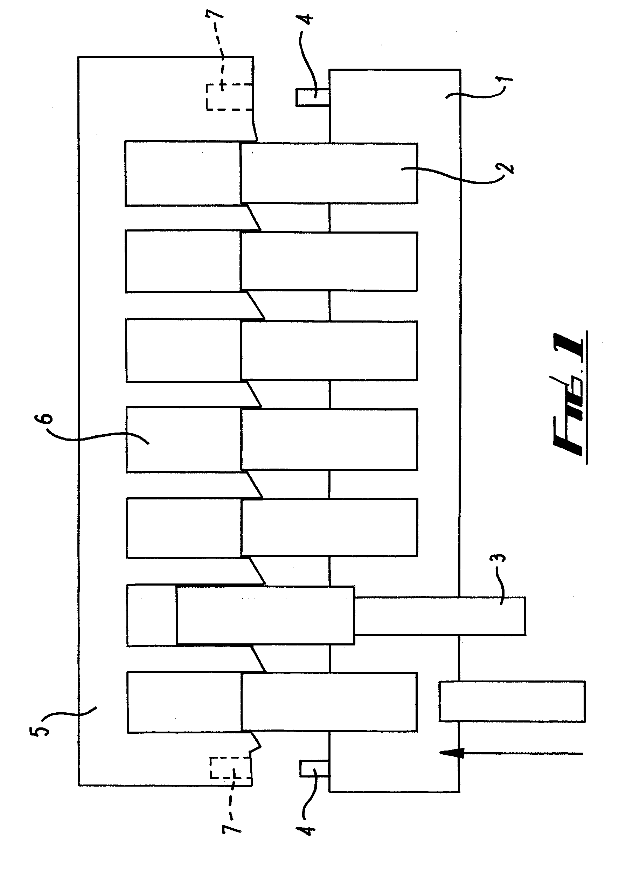

Figure 1 shows in general how a lifting head (whether or not it includes the present invention) is used in the selection of microtubes from a microtube rack. Referring to Figure 1, a microtube rack 1 defines a plurality of open topped cavities in each of which is disposed a microtube 2. The bottom of each cavity is partially closed to provide support for the microtubes 2 whilst permitting a lifting pin 3 to be introduced into the cavity beneath the microtube 2. Alignment pins 4 extend from the upper surface of the microtube 2 rack.

A lifting head 5 is used to remove selected microtubes 2 from the microtube rack 1. The lifting head 5 defines a plurality of cavities 6 for receiving microtubes 2. The cavities are sized so that the microtubes 2 fit into the cavities 6 with an interference fit. The cavities 6 are open to the bottom and at least partially open to the top to enable a pin to be introduced from above to displace any microtube 2 disposed in a cavity of a lifting head 5 out of the cavity through its lower opening. The underside of the lifting head includes alignment apertures 7.

When it is desired to remove selected microtubes from the microtube rack the lifting head 5 is placed over the rack so that the cavities of the lifting head and the cavities of the rack are aligned and alignment pins 4 are received into alignment holes 7. Selected microtubes 2 are then raised out of their cavities in the rack and urged into the corresponding cavity of the lifting head 5 by means of a lifting pin 3 introduced into the cavity in the rack from below. The lifting head 5 can then be removed from the rack 1 with the selected microtubes 2 retained within cavities of the lifting head. Subsequently the lifting head may be placed over another rack and the microtubes 2 retained in the lifting head displaced from the lifting head into the new rack by means of pins introduced into the cavities of the lifting head 1 from above.

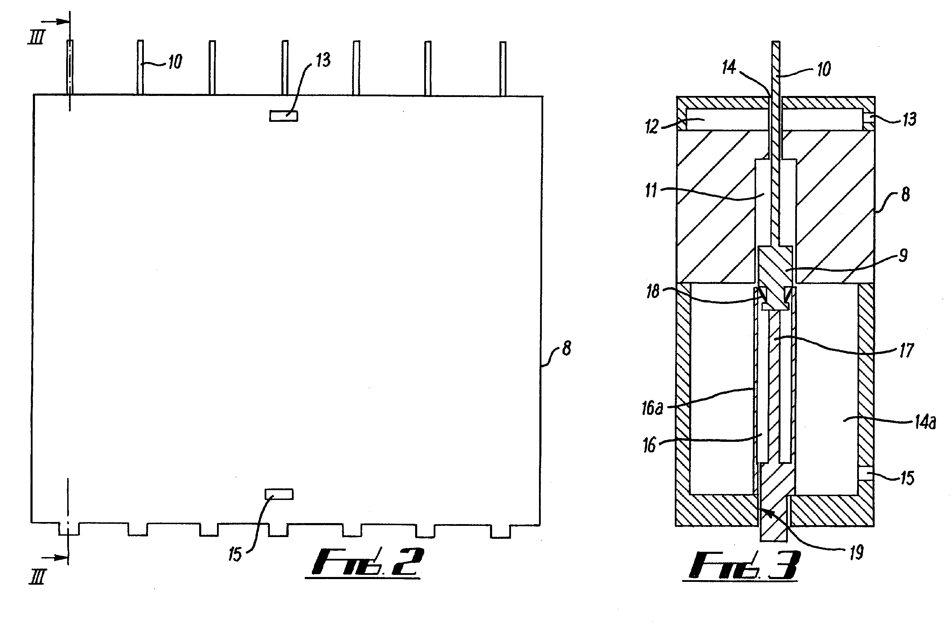

Figures 2 and 3 show an actuator assembly according to the invention suitable for use with the microtube rack and lifting head illustrated in Figure 1. Referring to Figures 2 and 3 the actuator assembly comprises a body 8 housing a plurality of movable members 9 each connected to a respective lifting pin 10 and arranged to move the lifting pin 10 relative to the body 8. The illustrated embodiment has seven movable members arranged linearly. It will be appreciated, however, that any number of movable members may be provided in any desired arrangement, for example as a grid or matrix.

The assembly is now further described with reference to figure 3 and the single lifting pin 10 arrangement it shows. This arrangement is repeated for each lifting pin 10 extending from the body 8. The upper part of the body 8 defines a cylinder 11 within which the movable member 9 is slidably mounted and with which it forms a substantially glass tight seal, so that it acts as a piston within the cylinder 11. The cylinder 11 is open to its lower end and to its upper end it is partially closed permitting the lifting pin 10 to extend out of the cylinder 11, but preventing the movable member 9 from passing upwardly out of the cylinder 11. The cylinder 11 and movable member may have any suitable cross-section. Above the cylinder 11 the body defines a chamber 12 connected to a port 13. The chamber extends over each cylinder 11 in the body. The lifting pin 10 extends through an aperture 14 in the upper surface of the body 8. The lifting pin 10 forms a reasonably gas tight seal with the upper part of the body 8. Below the cylinder 11 the body defines a further chamber 14, interconnected with the cylinder 11. Chamber 14 communicates with port 15 and extends beneath all of the cylinders 11 in the body 8.

A generally cylindrical electromagnet 16 is disposed in chamber 14, coaxially with the cylinder 11. The electromagnet 16 comprises a coil (not shown) housed in an outer cylindrical body 16a and surrounding a core 17. The outer cylindrical body 16a is slightly spaced beneath the cylinder 11. The core 17 of the electromagnet is recessed within the top of the cylindrical body so that it is spaced a greater distance from the cylinder 11 than the cylindrical body 16a. The movable member 9 comprises a lower portion of reduced diameter compared to the portion which forms a substantially gas tight seal with the cylinder 11. Disposed around the lower portion is a resilient seal 18 arranged to form a seal between the movable member 9 and electromagnet 16 when the two come into contact. Each electromagnet 16 is mounted on a printed circuit board associated with the bottom of the body 8.

A vent hole 19 is formed in the bottom of the body 8.

In use the lifting pins 10 are caused to move upwardly relative to the body 8 by introducing compressed air (or any other suitable fluid) into port 15. This increases the air pressure within chamber 14, exerting a force on the movable members 9 driving them upwardly in their respective cylinders 11, causing the lifting pins 10 to move upwardly out of the body 8. Movement of the movable members 9 within the cylinder 11 is controlled and dampened by air trapped above the movable member 9 within each cylinder 11 which air can only escape slowly from the top of the cylinder 11 between the lifting pin 10 and walls of the cylinder 11. This escape of air can be controlled by closing port 13 and/or by introducing compressed air into chamber 12 via port 13.

To lower the lifting pins 10 port 15 is opened allowing the movable members 9 and lifting pins 10 to fall under their own weight. Downward movement of the movable members 9 can also be caused by increasing air pressure in chamber 12 by introducing air into port 13 and/or by reducing the air pressure in chamber 14 by evacuating that chamber via port 15. Another possibility is the introduction of a resilient member to resiliently bias the movable member 9 in a downwards direction, for example a coil spring may be disposed within cylinder 11 above the movable member 9 and surrounding lifting pin 10.

Before the air pressure in chamber 14 is increased to move the movable members 9 upwards within their respective cylinders selected movable members 9 can be arranged to remain in their original position by energising their associated electromagnets 16. Energising an electromagnet 16 causes it to attract its associated movable member 9, drawing the lower part of the movable member 9 into the recessed region at the top of the magnet and effecting a seal between the outer body of the magnet and the movable member. This has a dual effect. Firstly the magnetic force draws the magnet and movable member together. Secondly, the seal created between the magnet and movable member prevents any increased air pressure in chamber 14 from coming into contact with most of the lower surface of the movable member 9, substantially reducing the force exerted on the movable member 9 by the air pressure. Any remaining force applied to the movable member 9 by air pressure within chamber 14 is overcome by the magnetic force existing between the movable member 9 and magnet 16. Consequently the size of magnet 16 required and its electrical current consumption is considerably less than would be required were each lifting pin to be operated by an associated solenoid. Rather only a relatively small magnetic force is required to prevent a lifting pin being lifted when air pressure is applied. When the magnet 16 is not activated, however, the lifting pin is raised with a greater force provided by air pressure in chamber 14.

The above embodiment is described by way of example only. Many variations are possible without departing from the invention as defined by the following claims.

## Claims

1. An actuator assembly comprising a body, a movable member movable relative to the body between a first position and a second position by application of fluid pressure and a releasable latch means operable to retain the movable member in the first position.

2. An actuator assembly as claimed in claim 1, wherein the movable member comprises a piston.

3. An actuator assembly as claimed in any preceding claim, wherein the movable member comprises or is associated with a surface to which fluid pressure is applied to move the movable member relative to the body and the latch means is operative to cover at least part of the surface when the movable member is latched in the first position thereby to prevent fluid pressure being applied to the covered part of the surface.

4. An actuator assembly as claimed in any preceding claim, wherein the latch means comprises a magnet.

5. An actuator assembly as claimed in claim 4, wherein the latch means comprises an electromagnet.

6. An actuator assembly as claimed in any preceding claim comprising a plurality of movable members, each associated with a respective individually operable latch means.

7. An actuator assembly as claimed in claim 6, wherein fluid pressure may be applied simultaneously to all of the movable members.

8. An actuator assembly as claimed in any preceding claim, wherein each of the movable members is in fluid communication with a common fluid chamber.

9. An actuator assembly as claimed in any preceding claim comprising return means for moving the or each movable member from the second position back to the first position.
